# EUROPÄISCHE PATENTSCHRIFT

(11) **EP 1 307 881 B1**
(45) Veröffentlichungstag und Bekanntmachung des Hinweises auf die Patenterteilung: **19.10.2011**
(21) Anmeldenummer: 01943439.8
(22) Anmeldetag: 23.05.2001
(51) Int. Cl.: G11B 7/24, G03H 1/02

(54) **HOLOGRAPHISCHER DATENSPEICHER, SEINE VERWENDUNG UND VERFAHREN ZUR DATENEINGABE**
HOLOGRAPHIC DATA MEMORY, ITS USE AND METHOD OF DATA INPUT
MEMOIRE DE DONNEES HOLOGRAPHIQUE, SON UTILISATION ET PROCEDE D'ENTREE DE DONNEES

(30) Priorität: 11.08.2000 DE 10039372
(43) Veröffentlichungstag der Anmeldung: 07.05.2003
(73) Patentinhaber: tesa scribos GmbH, 69126 Heidelberg (DE)
(72) Erfinder: STADLER, Stefan, 25474 Hasloh (DE); NOEHTE, Steffen, 69469 Weinheim (DE); DIETRICH, Christoph, 69126 Heidelberg (DE); LEIBER, Jörn, 22529 Hamburg (DE); GERSPACH, Matthias, 76646 Bruchsal (DE)
(74) Vertreter: UEXKÜLL & STOLBERG
(86) Internationale Anmeldenummer: PCT/EP2001/005932
(87) Internationale Veröffentlichungsnummer: WO 2002/015179

(56) Entgegenhaltungen:
- EP-A- 0 519 633
- EP-A- 0 528 134
- WO-A-00/17864
- DE-A- 3 723 522

## Beschreibung

Die Erfindung betrifft einen holographischen Datenspeicher, der z.B. zum Speichern von Bilddaten wie Fotos, Logos, Schrift, usw., aber auch zum Speichern von anderen Daten verwendet werden kann.

In einem Hologramm ist über die Fläche des Hologramms verteilt holographische Information über ein Objekt enthalten, aus der sich bei Bestrahlung mit Licht, insbesondere kohärentem Licht von einem Laser, ein Bild des Objektes rekonstruieren lässt. Hologramme werden in der Technik auf vielfältige Weise genutzt, z.B. in Form von weitgehend fälschungssicheren Kennzeichnungen. Derartige Kennzeichnungen finden sich z.B. auf Kreditkarten oder Scheckkarten; sie zeigen als sogenannte Weißlicht-Hologramme auch bei Beleuchtung mit natürlichem Licht ein dreidimensionales Bild des dargestellten Objekts. Verbreitet sind fotographisch hergestellte Hologramme sowie Prägehologramme, bei denen in die Oberfläche eines Werkstoffs eine Reliefstruktur eingeprägt ist, an der das zum Wiedergeben des Objekts verwendete Licht entsprechend der in dem Hologramm gespeicherten Information gestreut wird, so dass das rekonstruierte Bild des Objekts durch Interferenzeffekte entsteht.

In der WO 00/17864 A ist ein Datenspeicher mit einem optischen Informationsträger beschrieben, der eine als Speicherschicht eingerichtete Polymerfolie enthält. Die Polymerfolie besteht z.B. aus biaxial orientiertem Polypropylen. Bei dem vorbekannten Datenspeicher ist die Polymerfolie in mehreren Lagen spiralartig auf einen Wickelkern aufgewickelt, wobei sich zwischen benachbarten Lagen jeweils eine Adhäsionsschicht befindet. In den Datenspeicher lassen sich Informationen einschreiben, indem die Polymerfolie mit Hilfe eines auf eine vorgewählte Lage fokussierten Schreibstrahls eines Datenlaufwerks lokal erwärmt wird, wodurch sich die Brechzahl der Polymerfolie und das Reflexionsvermögen an der Grenzfläche der Polymerfolie lokal ändern. Dies kann mit Hilfe eines entsprechend fokussierten Lesestrahls in dem Datenlaufwerk erfasst werden, da der Lesestrahl je nach eingeschriebener Information lokal mehr oder weniger stark an der Grenzfläche der Polymerfolie reflektiert wird.

Bei dem aus der DE 37 23 522 A bekannten holographischen Datenspeicher erfolgt eine reversible Datenspeicherung durch eine lokale Änderung des Mischungszustandes einer Polymermischung. Durch die Änderung des Mischungszustandes wird die Trübung des Materials und damit das Reflexionsvermögen lokal variiert (Transparenz im gemischten Zustand, Opazität im entmischten Zustand). Durch eine gezielte Änderung des Reflexionsvermögens können somit Daten, auch in Form von Hologrammen, in der Polymermischung gespeichert werden. Die Speicherung von Hologrammen erfolgt dabei durch eine klassische Zweistrahlinterferenz (Objektstrahl und Referenzstrahl). Aufgrund der Methodik der Datenspeicherung und der Art des Speichermaterials ist die Anwendung auf amplitudenmodulierte Hologramme begrenzt. Auch ist die Herstellung eines derartigen holographischen Datenspeichers relativ komplex und teuer, da die Auswahl der möglichen Materialien sehr beschränkt ist. Nur wenige Polymermischungen zeigen nämlich den beschriebenen Effekt und ermöglichen damit eine Datenspeicherung. Die Herstellung wird zudem dadurch erschwert, dass die Ausgangsmaterialien nicht nur miteinander gemischt werden müssen, sondern diese Mischung auch äußerst homogen erfolgen muss, um eine gute Beschriftungsqualität erzielen zu können.

Die EP 0 519 633 A zeigt ein bandförmiges Speichermedium, welches auf Spulen aufgewickelt wird, um eine Kassette auszubilden. Um die Wickelcharakterstik günstig einzustellen, wird über eine spezielle Beschichtung des Speichermediums ein bestimmter Reibungskoeffizient eingestellt. Alternativ kann die Bandoberfläche zum selben Zweck texturiert sein. Die Datenspeicherung selbst erfolgt durch ein punktweises Beschriften des Datenspeichers mittels eines Lasers. Die Beschriftung basiert dabei auf einer Ablation, einer Phasenänderung (Übergang von amorph zu kristallin) oder einer Verformung. Hierbei kann es sich also auch um eine Änderung der Oberflächenstruktur handeln. Zur Speicherung holographischer Information ist dieser Datenspeicher nicht geeignet, da ein Auslesen holographischer Information nicht in hinreichender Qualität sichergestellt ist.

Die EP 0 528 134 A offenbart eine Polyesterfolie als optisches Speichermedium auf Basis magnetooptischer Funktionsschichten. Insbesondere eine Datenspeicherung durch eine lokale Änderung der Oberflächenstruktur ist dabei nicht vorgesehen.

Es ist Aufgabe der Erfindung, einen holographischen Datenspeicher zu schaffen, der kostengünstig ist und breite Anwendungsmöglichkeiten hat.

Diese Aufgabe wird gelöst durch einen holographischen Datenspeicher mit den Merkmalen des Anspruchs 1 sowie die Verwendung eines Datenspeichers gemäß Anspruch 6. Ein Verfahren zum Eingeben von Information in einen derartigen Datenspeicher ist im Anspruch 8 angegeben, ein Verfahren zum Auslesen von Information aus einem derartigen Datenspeicher im Anspruch 12. Vorteilhafte Ausgestaltungen der Erfindung sind in den abhängigen Ansprüchen angeführt.

Der erfindungsgemäße holographische Datenspeicher weist eine als Speicherschicht eingerichtete Polymerfolie auf, deren Oberflächenstruktur lokal durch Erwärmung veränderbar ist. Die Polymerfolie ist zum Speichern von holographischer Information über die lokale Oberflächenstruktur der Polymerfolie eingerichtet.

Die Oberflächenstruktur oder Topographie der Polymerfolie lässt sich lokal verändern, indem zum Beispiel ein als Schreibstrahl dienender Laserstrahl auf die Polymerfolie, vorzugsweise deren Oberflächenzone, fokussiert wird, so dass die Lichtenergie dort absorbiert und in Wärmeenergie umgewandelt wird. Insbesondere wenn der Laserstrahl kurzzeitig (gepulst) eingestrahlt wird, bleibt die zu der lokalen Änderung der Oberflächenstruktur führende Materialveränderung in der Polymerfolie aufgrund der allgemein schlechten Wärmeleitfähigkeit des Polymers auf ein sehr enges Volumen begrenzt.

Beim Eingeben von Information in den holographischen Datenspeicher wird die Strukturveränderung der Oberfläche vorzugsweise Punkt für Punkt induziert, wie weiter unten näher erläutert. Der lokale Bereich zum Speichern einer Informationseinheit (im Folgenden als "Pit" bezeichnet) hat typischerweise lineare seitliche Abmessungen (d.h. zum Beispiel eine Seitenlänge oder einen Durchmesser) in der Größenordnung von 0,5 µm bis 1 µm, aber auch andere Größen sind möglich. Das Höhenprofil der Polymerfolie ändert sich beim Verändern der Oberflächenstruktur in einem Pit typischerweise um 50 nm bis 500 nm, was im Einzelnen von den Eigenschaften und Betriebsbedingungen des Schreibstrahls sowie den Eigenschaften des Datenspeichers abhängt. Das Punktraster, d.h. der Mittenabstand zwischen zwei Pits, liegt typischerweise im Bereich von 1 µm bis 2 µm. Generell gilt, dass kürzere Lichtwellenlängen des Schreibstrahls ein engeres Punktraster zulassen.

Um aus dem erfindungsgemäßen holographischen Datenspeicher Information auszulesen, kann die Speicherschicht mit kohärentem Licht bestrahlt werden, so dass die Oberflächenstruktur der Polymerfolie wie ein Beugungsgitter wirkt und durch Interferenzeffekte ein holographisches Bild entsteht, wie weiter unten näher erläutert.

Der erfindungsgemäße holographische Datenspeicher ist kostengünstig und lässt sich auf vielfältige Weise anwenden.

Die Polymerfolie kann verstreckt sein und ist vorzugsweise biaxial verstreckt, z.B. indem sie bei der Herstellung innerhalb ihrer Ebene in zwei senkrecht aufeinanderstehenden Richtungen vorgespannt wird. Bei einer verstreckten Polymerfolie ist im Folienmaterial eine hohe Energiedichte gespeichert. Durch lokale Erwärmung unter Deposition einer verhältnismäßig geringen Energiemenge pro Flächeneinheit, z.B. mit Hilfe eines Schreibstrahls, kann eine relativ starke Materialänderung mit einer Veränderung der lokalen Oberflächenstruktur der Polymerfolie erzielt werden. Biaxial verstreckte Polymerfolien lassen sich aus kostengünstigen Massenkunststoffen herstellen.

Geeignete Materialien für die Polymerfolie sind z.B. Polypropylen oder Polyvinylchlorid, wobei Polymerfolien, die ein derartiges Material aufweisen, vorzugsweise biaxial verstreckt sind. Eine höhere Temperaturstabilität und damit auch eine verbesserte Alterungsbeständigkeit und Lagerstabilität des holographischen Datenspeichers und eine erhöhte Sicherheit gegen Datenverlust infolge von Alterungsprozessen lässt sich mit Polymerfolien erzielen, die einen erhöhten Kristallitschmelzpunkt haben. Beispiele für derartige Materialien sind Polyethylenterephthalat (PET), Polymethylpenten (PMP; auch Poly-2-methylpenten) sowie Polyimid, wobei auch eine Polymerfolie aus derartigen Materialien vorzugsweise biaxial verstreckt ist. Bei höheren Intensitäten eines Schreibstrahls können auch andere Folientypen eingesetzt werden.

Bevorzugte Dicken der Polymerfolie liegen im Bereich von 10 µm bis 200 µm, aber auch kleinere oder größere Dicken sind denkbar. Der Polymerfolie kann ein Absorberfarbstoff zugeordnet sein, der dazu eingerichtet ist, einen zum Eingeben von Information dienenden Schreibstrahl zumindest teilweise zu absorbieren und die dabei erzeugte Wärme zumindest teilweise lokal an die Polymerfolie abzugeben. Ein derartiger Absorberfarbstoff ermöglicht eine zur Veränderung der Oberflächenstruktur ausreichende lokale Erwärmung der Polymerfolie bei relativ geringer Intensität des Schreibstrahls. Vorzugsweise ist der Absorberfarbstoff in dem Material der Polymerfolie enthalten. Er kann aber auch in einer separaten Absorberschicht angeordnet sein, die vorzugsweise ein Bindemittel aufweist; Mischformen sind ebenfalls denkbar. So kann die Absorberschicht zum Beispiel eine dünne Schicht (z.B. einer Dicke von 1 µm bis 5 µm) aus einem optisch transparenten Polymer aufweisen (z.B. aus Polymethylmethacrylat (PMMA) oder, bei Anwendungen für höhere Temperatur, aus Polymethylpenten, Polyetheretherketon (PEEK) oder Polyetherimid), das als Matrix oder Bindemittel für die Moleküle des Absorberfarbstoffs dient. Das Absorptionsmaximum des Absorberfarbstoffs sollte mit der Lichtwellenlänge des verwendeten Schreibstrahls zusammenfallen, um eine effiziente Absorption zu erzielen. Für eine Lichtwellenlänge von 532 nm eines von einem Laser erzeugten Schreibstrahls sind z.B. Farbstoffe aus der Sudanrot-Familie (Diazofarbstoffe) oder (für besonders polare Kunststoffe) Eosinscharlach geeignet. Für die gebräuchlichen Laserdioden mit einer Lichtwellenlänge von 665 nm oder 680 nm sind grüne Farbstoffe, z.B. aus der Styryl-Familie (die als Laserfarbstoffe gebräuchlich sind), besser geeignet.

An der beim Speichern von holographischer Information veränderten Oberfläche der Polymerfolie ist eine Reflexionsschicht angeordnet. Wenn diese Reflexionsschicht nach dem Eingeben von Information aufgebracht oder beim Eingeben von Information nicht oder nicht wesentlich verändert wird, erhöht sie die Effizienz des holographischen Datenspeichers. Denn beim Auslesen von Information verwendetes kohärentes Licht wird zu einem großen Teil von der Reflexionsschicht an der Oberfläche reflektiert und dabei von der Oberflächenstruktur moduliert, so dass ein relativ helles holographisches Bild entsteht.

Die Reflexionsschicht kann aber auch so gestaltet sein, dass das Reflexionsvermögen der Reflexionsschicht lokal durch Erwärmung veränderbar ist. Dies lässt sich zum Beispiel mit einer sehr dünnen Reflexionsschicht erreichen, die unter der Wärmeeinwirkung eines Schreibstrahls lokal teilweise oder vollständig verdampft. Eine derartige Reflexionsschicht ermöglicht einen holographischen Datenspeicher, bei dem beim Eingeben von Information sowohl die Oberflächenstruktur der Polymerfolie (sowie der angrenzenden Reflexionsschicht) als auch das Reflexionsvermögen bzw. die Lichtdurchlässigkeit der Reflexionsschicht verändert werden. Beim Auslesen von Information erhält man dadurch zusätzlich zu einer Phasenmodulation (infolge der variierenden Oberflächenstruktur) auch noch eine Amplitudenmodulation (infolge der variierenden Lichtdurchlässigkeit). Ein derartiger holographischer Datenspeicher bietet zahlreiche Anwendungsmöglichkeiten.

Bei einer bevorzugten Ausgestaltung der Erfindung weist der holographische Datenspeicher eine Klebeschicht zum Aufkleben des Datenspeichers auf einen Gegenstand auf. Die Klebeschicht ermöglicht es, den Datenspeicher schnell und problemlos auf einen gewünschten Gegenstand zu kleben, z.B. um den Datenspeicher als maschinenlesbares Etikett zu nutzen, in dem Information über den Gegenstand gespeichert ist. Als Klebeschicht eignet sich insbesondere eine Selbstklebeschicht oder eine Schicht mit einem druckempfindlichen Kleber, die vorzugsweise im Lieferzustand des Datenspeichers mit einer abziehbaren Schutzabdeckung (z.B. aus einer Folie oder einem Silikonpapier) versehen ist.

Außer den bisher erwähnten Schichten oder Lagen kann der erfindungsgemäße Datenspeicher auch zusätzliche Lagen aufweisen, z.B. eine transparente Schutzschicht oder einen flexiblen oder formstabilen Träger.

Die zu speichernde Information kann in den erfindungsgemäßen holographischen Datenspeicher durch ein Verfahren eingegeben werden, bei dem in einem Hologramm eines Speicherobjekts enthaltene holographische Information als zweidimensionale Anordnung berechnet wird und ein Schreibstrahl einer Schreibeinrichtung, vorzugsweise eines Laserlithographen, auf eine Speicherschicht und/oder gegebenenfalls die zugeordnete Absorberschicht des Datenspeichers gerichtet und entsprechend der zweidimensionalen Anordnung so angesteuert wird, dass die lokale Oberflächenstruktur der als Speicherschicht eingerichteten Polymerfolie gemäß der holographischen Information eingestellt wird. Da die physikalischen Vorgänge bei der Streuung von Licht an einem Speicherobjekt bekannt sind, kann z.B. ein herkömmlicher Aufbau zum Erzeugen eines Hologramms (bei dem kohärentes Licht von einem Laser, das von einem Objekt (Speicherobjekt) gestreut wird, mit einem kohärenten Referenzstrahl zur Interferenz gebracht wird und das dabei entstehende Interferenzmuster als Hologramm aufgenommen wird) mit Hilfe eines Computerprogramms simuliert und das Interferenzmuster bzw. die Modulation für die Oberflächenstruktur der Polymerfolie als zweidimensionale Anordnung (zweidimensionaler Array) berechnet werden. Die Auflösung eines geeigneten Laserlithographen beträgt typischerweise etwa 50 000 dpi (dots per inch). Damit kann die Oberflächenstruktur der Polymerfolie lokal in Bereichen oder Pits einer Größe von etwa 0,5 µm bis 1 µm verändert werden. Die Schreibgeschwindigkeit und andere Details hängen unter anderem von den Parametern des Schreiblasers (Laserleistung, Lichtwellenlänge) und der Belichtungsdauer sowie von den Eigenschaften der Speicherschicht und eines etwaigen Absorberfarbstoffs ab.

Die holographische Information wird also vorzugsweise in Form von Pits vorgegebener Größe eingegeben; der Begriff "Pit" ist hier allgemein im Sinne eines veränderten Bereichs und nicht ausschließlich in seiner ursprünglichen Bedeutung als Loch oder Vertiefung zu verstehen. Dabei kann in einem Pit die holographische Information in binär kodierter Form gespeichert werden. Das heißt, im Bereich eines gegebenen Pits nimmt die Oberflächenstruktur der Speicherschicht nur eine von zwei möglichen Grundformen an. Diese Grundformen unterscheiden sich vorzugsweise deutlich, damit in der Praxis vorkommende Zwischenformen, die nahe bei der einen oder der anderen Grundform liegen, eindeutig der einen oder der anderen Grundform zugeordnet werden können, um die Information zuverlässig und eindeutig zu speichern.

Alternativ kann in einem Pit die holographische Information in kontinuierlich kodierter Form gespeichert werden, wobei die lokale maximale Höhenänderung der Oberflächenstruktur in dem Pit aus einem vorgegebenen Wertebereich ausgewählt wird. Dies bedeutet, dass in einem gegebenen Pit die Oberflächenstruktur der Speicherschicht Zwischenformen zwischen zwei Grundformen annehmen kann, so dass die maximale Höhenänderung der vorliegenden Zwischenform einen Wert aus einem vorgegebenen Wertebereich annimmt, dessen Grenzen durch die maximalen Höhenänderungen der beiden Grundformen gegeben sind. In diesem Fall lässt sich die Information also "in Graustufen" abspeichern, so dass jedem Pit der Informationsgehalt von mehr als einem Bit zukommt.

Weil an der beim Speichern von holographischer Information veränderten Oberfläche der Polymerfolie eine Reflexionsschicht angeordnet ist, wird diese Reflexionsschicht vorzugsweise aufgebracht, nachdem die lokale Oberflächenstruktur der Polymerfolie gemäß der holographischen Information eingestellt worden ist. Die Reflexionsschicht kann aber auch aufgebracht werden, bevor die lokale Oberflächenstruktur der Polymerfolie gemäß der holographischen Information eingestellt wird. Im letzteren Fall ermöglicht eine Reflexionsschicht, deren Reflexionsvermögen lokal durch Erwärmung veränderbar ist, einen holographischen Datenspeicher, bei dem über lokale Erwärmung mittels des Schreibstrahls sowohl die lokale Oberflächenstruktur der Polymerfolie als auch das lokale Reflexionsvermögen der Reflexionsschicht gemäß der holographischen Information eingestellt werden. Die Vorteile dieser Varianten sind weiter oben erläutert.

Bei einem Verfahren zum Auslesen von Information aus einem erfindungsgemäßen holographischen Datenspeicher wird Licht, vorzugsweise kohärentes Licht (z.B. von einem Laser), großflächig auf eine Speicherschicht des Datenspeichers gerichtet und von der Oberflächenstruktur der Polymerfolie moduliert. Als Rekonstruktion der in dem von dem Licht erfassten Bereich enthaltenen holographischen Information wird ein holographisches Bild in einem Abstand zu dem Datenspeicher erfasst, z.B. mit einem CCD-Sensor, der mit einer Datenverarbeitungseinrichtung verbunden ist.

Unter dem Begriff "großflächig" ist eine Fläche zu verstehen, die deutlich größer ist als die Fläche eines Pits. In diesem Sinne ist z.B. eine Fläche von 1 mm² großflächig. Für das Schema, nach dem Information in einem erfindungsgemäßen holographischen Datenspeicher abgelegt und daraus ausgelesen wird, gibt es viele verschiedene Möglichkeiten. Es ist denkbar, den Datenspeicher auf einmal auszulesen, indem die gesamte Fläche der als Speicherschicht eingerichteten Polymerfolie auf einmal bestrahlt wird. Insbesondere bei größeren Flächen ist es jedoch vorteilhaft, die zu speichernde Information auf eine Anzahl oder Vielzahl von Einzelbereichen aufzuteilen (z.B. mit einer jeweiligen Fläche von 1 mm²) und die Information lediglich aus einem vorgegebenen Einzelbereich auf einmal auszulesen.

Dass beim Auslesen von Information je nach Ausgestaltung des holographischen Datenspeichers das Licht die Polymerfolie durchstrahlt oder auch nicht durchstrahlt (wenn es direkt an der Oberflächenstruktur bzw. der dort befindlichen Reflexionsschicht zurückgeworfen wird) und gegebenenfalls nicht nur von der Oberflächenstruktur der Polymerfolie, sondern auch von dem lokal variierenden Reflexionsvermögen der Reflexionsschicht moduliert wird, wurde bereits weiter oben erläutert.

Beim Auslesen von Information kommt es durch die lokal variierende Oberflächenstruktur der Polymerfolie, also deren regional unterschiedliche Topographie, zu Laufzeitunterschieden der von verschiedenen Punkten ausgehenden Lichtwellen, also letztlich zu einer periodischen Phasenmodulation. Dies gilt sowohl für Anordnungen, bei denen die Polymerfolie durchstrahlt wird (mit oder ohne Reflexion) als auch für Anordnungen, bei denen sie nicht durchstrahlt wird (direkte Reflexion an der Oberflächenstruktur). Hinzu kommt im Falle eines lokal variierenden Reflexionsvermögens eine Amplitudenmodulation. Der von dem kohärenten Licht erfasste Bereich der Polymerfolie wirkt so wie ein Beugungsgitter, das einfallendes Licht in einer definierten Art und Weise ablenkt. Das abgelenkte Licht formt ein Bild des Speicherobjekts, das die Rekonstruktion von in dem holographischen Datenspeicher kodierter Information darstellt.

Der erfindungsgemäße holographische Datenspeicher lässt sich für unterschiedliche Arten von Speicherobjekten nutzen. So können sowohl die in Bildern wie z.B. Fotographien, Logos, Schrift, usw. enthaltene Information als auch maschinenlesbare Daten abgespeichert und ausgelesen werden. Letzteres erfolgt beispielsweise in Form sogenannter Datenseiten, wobei die in einem Hologramm eines graphischen Bitmusters (das die Dateninformation darstellt) enthaltene holographische Information wie erläutert in die Speicherschicht eingegeben wird. Beim Auslesen entsteht ein holographisches Bild dieses graphischen Bitmusters. Die darin enthaltene Information kann z.B. mit Hilfe eines genau justierten CCD-Sensors erfasst und über zugehörige Auswertesoftware verarbeitet werden. Für die Wiedergabe von Bildern, bei denen es nicht auf eine hohe Genauigkeit ankommt, reicht im Prinzip bereits eine einfache Mattscheibe oder z.B. eine Kamera mit einem LCD-Bildschirm.

Bei der holographischen Speicherung maschinenlesbarer Daten ist es vorteilhaft, dass die Information nicht sequentiell ausgelesen werden muss, sondern dass ein ganzer Datensatz auf einmal erfasst werden kann, wie erläutert. Sollte die Oberfläche der Speicherschicht beschädigt sein, so führt dies im Gegensatz zu einem herkömmlichen Datenspeicher nicht zu einem Datenverlust, sondern lediglich zu einer Verschlechterung der Auflösung des beim Auslesen der Information rekonstruierten holographischen Bildes, was in der Regel unproblematisch ist.

Im Folgenden wird die Erfindung anhand von Ausführungsbeispielen weiter erläutert. Die Zeichnungen zeigen in
- Figur 1: eine schematische Ansicht einer Ausführungsform des erfindungsgemäßen holographischen Datenspeichers, wobei mit Hilfe eines Schreibstrahls Information eingegeben wird,
- Figur 2: eine schematische Ansicht des holographischen Daten- speichers aus Figur 1, nachdem zum Eingeben der Infor- mation die Oberflächenstruktur lokal verändert worden ist,
- Figur 3: eine schematische Ansicht des holographischen Daten- speichers gemäß Figur 2, nachdem die veränderte Obe- flächenstruktur mit einer Reflexionsschicht versehen worden ist, beim Auslesen von Information und
- Figur 4: eine schematische Ansicht einer nicht zur Erfindung gehörenden Ausführungsform eines holographischen Da- tenspeichers beim Auslesen von Information.

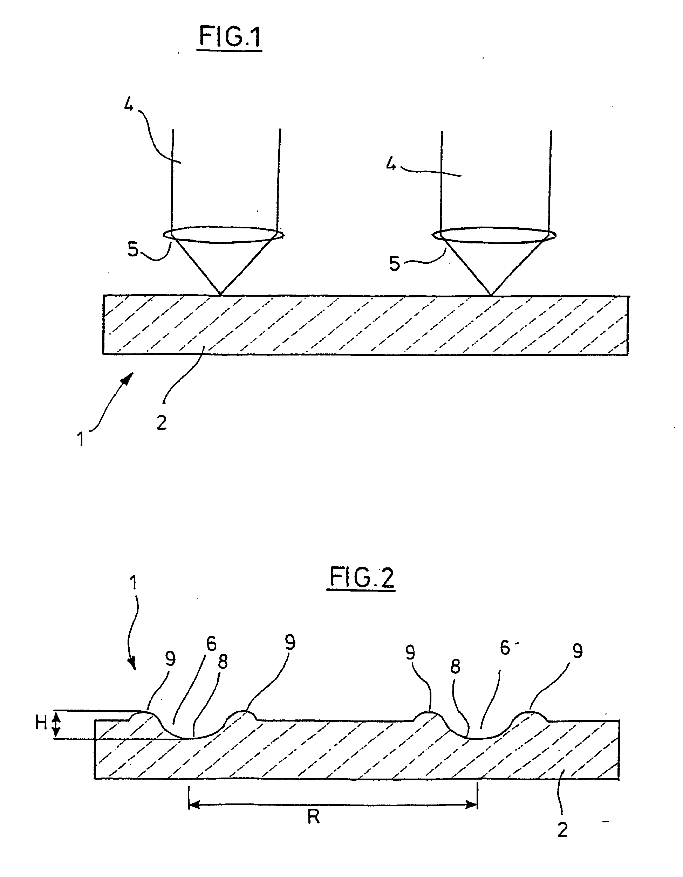

In Figur 1 ist eine Ausführungsform eines holographischen Datenspeichers 1 in schematischer Längsschnittansicht dargestellt. Der Datenspeicher 1 weist eine als Speicherschicht eingerichtete Polymerfolie 2 auf, die im Ausführungsbeispiel aus biaxial orientiertem Polypropylen (BOPP) besteht und eine Dicke von 50 µm hat.

In dem Material der Polymerfolie 2 ist ein Absorberfarbstoff enthalten, der Licht eines Schreibstrahls absorbiert und in Wärme umwandelt. Im Ausführungsbeispiel ist als Absorberfarbstoff Sudanrot 7B verwendet, das besonders gut Licht im Wellenlängenbereich um 532 nm absorbiert; diese Wellenlänge ist für einen Schreibstrahl eines Laserlithographen zum Eingeben von Information in den Datenspeicher 1 denkbar. Beispiele für andere Absorberfarbstoffe sind weiter oben angegeben. So eignen sich grüne Farbstoffe, z.B. aus der Styryl-Familie, besonders für Lichtwellenlängen von 665 nm oder 680 nm, bei denen die Laserdioden derzeitiger DVD-Geräte arbeiten; die Pulse derartiger Laserdioden können direkt moduliert werden, was die Pulserzeugung wesentlich vereinfacht und verbilligt.

Die Polymerfolie 2 mit dem Absorberfarbstoff hat eine bevorzugte optische Dichte im Bereich von 0,2 bis 1,0; andere Werte sind aber ebenfalls möglich. Die optische Dichte ist ein Maß für die Absorption, hier bezogen auf die Lichtwellenlänge eines Schreibstrahls. Definiert ist die optische Dichte als negativer dekadischer Logarithmus der Transmission durch die Absorberschicht, was mit dem Produkt des Extinktionskoeffizienten bei der verwendeten Wellenlänge des Schreibstrahls, der Konzentration des Absorberfarbstoffs in der Polymerfolie 2 und der Dicke der Polymerfolie 2 übereinstimmt.

Der Absorberfarbstoff erleichtert das Eingeben von Information in den Datenspeicher 1. Denn wenn ein Schreibstrahl 4 zum Beispiel mit Hilfe einer Linse 5 auf die Polymerfolie 2 fokussiert wird, und zwar vorzugsweise in deren Oberflächenzone, so wird die Lichtenergie des Schreibstrahls 4 besonders effizient in Wärme umgewandelt. In Figur 1 sind zwei Schreibstrahlen 4 und zwei Linsen 5 eingezeichnet, um das Einschreiben von Information an zwei verschiedenen Stellen der Polymerfolie 2 zu veranschaulichen. In der Praxis fährt der Schreibstrahl 4 jedoch vorzugsweise sequentiell über die Oberfläche der Polymerfolie 2. Zum Eingeben der Information eignet sich zum Beispiel ein Laserlithograph mit einer Auflösung von etwa 50 000 dpi (d.h. etwa 0,5 µm). Der Schreibstrahl des Laserlithographen wird im gepulsten Betrieb (typische Pulsdauer von etwa 1 µs bis etwa 10 µs bei einer Strahlleistung von etwa 1 mW bis etwa 10 mW zum Belichten bzw. Erwärmen einer Stelle) über die Oberseite der Polymerfolie 2 geführt, also in der Regel in zwei Raumrichtungen, um die gewünschte Information sequentiell in den Datenspeicher 1 (oder einen vorgewählten Bereich des Datenspeichers 1) einzugeben.

Figur 2 zeigt das Ergebnis der Einwirkung des gepulsten Schreibstrahls 4. Wegen der schlechten Wärmeleitfähigkeit des Materials der Polymerfolie 2 kommt es in einem eng begrenzten Volumen zu einer signifikanten Temperaturerhöhung, bei der sich die Oberflächenstruktur der Polymerfolie 2 lokal verändert. Auf diese Weise entsteht ein Pit 6, d.h. der lokale Bereich, in dem Information abgelegt ist. Zu jedem Pit 6 gehört eine zentrale Vertiefung 8, die von einer peripheren Aufwerfung 9 umgeben ist. Der Niveauunterschied zwischen dem tiefsten Punkt der Vertiefung 8 und dem höchsten Punkt der Aufwerfung 9, d.h. die lokale maximale Höhenänderung der Oberflächenstruktur in dem Pit 6, ist in Figur 2 mit H bezeichnet. H liegt typischerweise im Bereich von 50 nm bis 500 nm. Der Abstand zwischen den Zentren zweier benachbarter Pits 6, d.h. das Punktraster R, liegt vorzugsweise im Bereich von 1 µm bis 2 µm. Im Ausführungsbeispiel hat ein Pit 6 einen Durchmesser von etwa 0,8 µm. Andere Formen als kreisrunde Pits 6 sind ebenfalls möglich. Vorzugsweise beträgt die typische Abmessung eines Pits etwa 0,5 µm bis 1,0 µm.

In einem Pit 4 kann die Information in binär kodierter Form gespeichert sein, indem H nur zwei verschiedene Werte annimmt (wobei einer der beiden Werte vorzugsweise 0 ist). Es ist auch möglich, in einem Pit 4 die Information in kontinuierlich kodierter Form zu speichern, wobei H für ein gegebenes Pit 4 einen beliebig ausgewählten Wert aus einem vorgegebenen Wertebereich einnehmen kann. Anschaulich gesprochen, ist bei Speicherung in binär kodierter Form ein Pit "schwarz" oder "weiß", während es bei Speicherung in kontinuierlich kodierter Form auch alle dazwischen liegenden Grauwerte annehmen kann.

Um in den Datenspeicher 1 Information einzugeben, wird zunächst in einem Hologramm eines Speicherobjekts enthaltene holographische Information als zweidimensionale Anordnung berechnet. Dies kann zum Beispiel als Simulation eines klassischen Aufbaus zum Erzeugen eines fotographisch erfassten Hologramms durchgeführt werden, bei dem kohärentes Licht von einem Laser, das von dem Speicherobjekt gestreut wird, mit einem kohärenten Referenzstrahl zur Interferenz gebracht und das dabei entstehende Modulationsmuster als Hologramm aufgenommen wird. Die zweidimensionale Anordnung (zweidimensionaler Array) enthält dann die Information, die zum Ansteuern des Schreibstrahls eines weiter oben bereits erläuterten Laserlithographen erforderlich ist. Wenn der Schreibstrahl des Laserlithographen im gepulsten Betrieb über die Oberseite des Datenspeichers 1 geführt wird, erwärmt er die Polymerfolie 2 entsprechend dem zweidimensionalen Array. Dabei werden die Pits 6 erzeugt, wie oben gesehen.

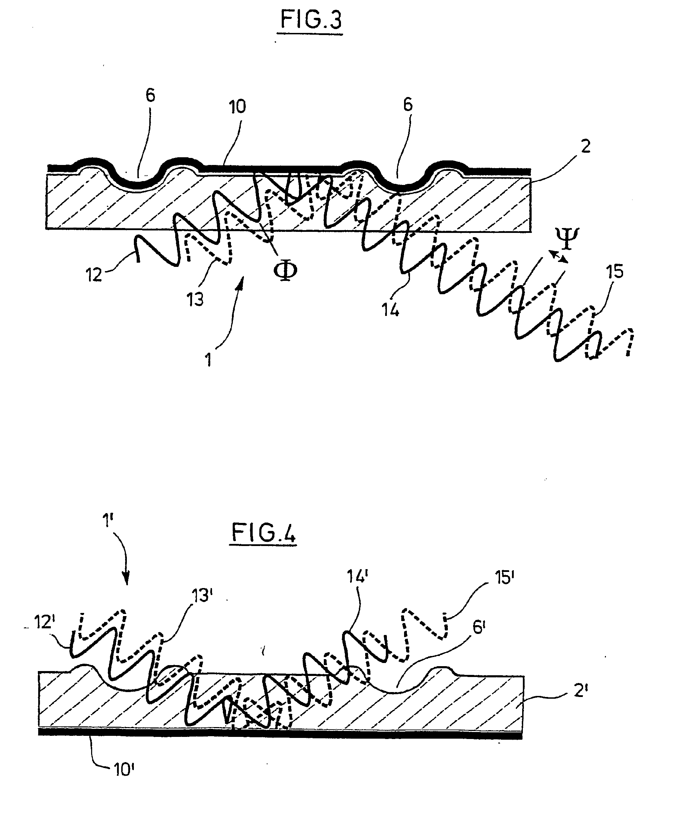

Um das Auslesen von Information aus dem Datenspeicher 1 zu erleichtern, wird die Oberfläche der Polymerfolie 2 mit der veränderten Oberflächenstruktur, also nach dem Eingeben der Information, im Ausführungsbeispiel mit Aluminium bedampft, so dass eine Reflexionsschicht 10 mit einer Dicke von zum Beispiel 50 nm entsteht, siehe Figur 3.

In Figur 3 ist in schematischer Weise veranschaulicht, wie die in dem Datenspeicher 1 gespeicherte Information ausgelesen werden kann. Dazu wird kohärentes Licht von einem Laser (vorzugsweise einer Wellenlänge, die von dem Absorberfarbstoff in der Polymerfolie 2 nicht oder nur geringfügig absorbiert wird) auf die im Wesentlichen ebene Unterseite des Datenspeichers 1 gerichtet. Der Übersichtlichkeit halber ist von diesem vorzugsweise parallel einfallenden kohärenten Licht (einfallender Lesestrahl) in Figur 3 nur ein kleiner Ausschnitt dargestellt, nämlich die mit 12 und 13 bezeichneten einfallenden Lichtwellen. In der Praxis ist das kohärente Licht großflächig auf die Polymerfolie 2 gerichtet und überdeckt einen Bereich von zum Beispiel 1 mm². Denn zur Rekonstruktion der abgespeicherten Information muss das von vielen Pits 6 ausgehende Licht erfasst werden. Die Intensität des einfallenden Lesestrahls ist zu schwach, um die Oberflächenstruktur der Polymerfolie 2 und somit die abgespeicherte Information zu verändern.

Die Lichtwellen 12 und 13 haben zueinander eine feste Phase Φ. Sie fallen aus praktischen Gründen unter einem Winkel auf die Rückseite der Reflexionsschicht 10, nachdem sie die Polymerfolie 2 durchdrungen haben, und werden an der Reflexionsschicht 10 reflektiert, so dass reflektierte Lichtwellen 14 und 15 von der Reflexionsschicht 10 ausgehen und wiederum die Polymerfolie 2 durchdringen. Da die lokale Oberflächenstruktur der Polymerfolie 2 und entsprechend der Reflexionsschicht 10 über die Pits 6 variiert, kommt es zu einer Phasenverschiebung, und die reflektierten Lichtwellen 14 und 15 treten mit einer Phase Ψ aus, wie in Figur 3 veranschaulicht. Dies hat zur Folge, dass von dem Datenspeicher 1 nach Art eines Beugungsgitters Lichtwellen in viele Richtungen ausgehen, in denen Phaseninformation enthalten ist. In einigem Abstand von dem Datenspeicher 1 kann mit einem Detektor ein holographisches Bild erfasst werden, das durch Interferenz dieser Lichtwellen zustande kommt und eine Rekonstruktion der gespeicherten Information darstellt.

Figur 4 zeigt eine weitere Ausführungsform eines Datenspeichers, der hier mit 1' bezeichnet ist und eine ähnlich wie die Polymerfolie 2 gestaltete Polymerfolie 2' aufweist. Im Unterschied zu der Ausführungsform gemäß den Figuren 1 bis 3 ist der Datenspeicher 1' jedoch von vornherein auf der ebenen Unterseite der Polymerfolie 2' mit einer Reflexionsschicht 10' versehen. Die Reflexionsschicht 10' wird beim Eingeben von Information, d.h. bei der Veränderung der Oberflächenstruktur der Polymerfolie 2', wobei die in Figur 4 angedeuteten Pits 6' entstehen, nicht beeinflusst.

Zum Auslesen von Information aus dem Datenspeicher 1' kann wie zuvor kohärentes Licht verwendet werden, wie in Figur 4 durch die einfallenden Lichtwellen 12' und 13' angezeigt. Diese Lichtwellen werden an der Reflexionsschicht 10' reflektiert und treten als reflektierte Lichtwellen 14' und 15' aus. Da die Lichtwellen bei ihrem zweimaligen Durchtritt durch die Polymerfolie 2' infolge der variierenden Oberflächenstruktur der Pits 6' relativen Phasenverschiebungen unterliegen, kann auch aus der Oberflächenstruktur des Datenspeichers 1' ein holographisches Bild rekonstruiert werden.

Der für den Detektor erforderliche Aufwand und die Weiterverarbeitung des erfassten holographischen Bilds hängen von der Art des Speicherobjekts ab. Für die Wiedergabe von maschinenlesbaren Daten (Datenseiten, siehe oben) eignet sich besonders ein mit einer Datenverarbeitungseinrichtung verbundener CCD-Sensor, während für eine reine Bildwiedergabe auch ein einfacherer Detektor sinnvoll ist, insbesondere dann, wenn die Bilddaten nicht weiterverarbeitet werden sollen.

Weitere Möglichkeiten für eine Reflexionsschicht wurden bereits weiter oben beschrieben. Beispielsweise können in der Anordnung gemäß Figur 3 die einfallenden Lichtwellen auch von oben auf die Reflexionsschicht auftreffen, so dass das Licht die Polymerfolie 2 nicht durchstrahlt. Ferner kann eine Reflexionsschicht entfallen, insbesondere wenn das einfallende Licht unter einem flachen Winkel auftrifft. Die zusätzlichen Möglichkeiten für die holographische Datenspeicherung, die sich ergeben, wenn das lokale Reflexionsvermögen einer Reflexionsschicht durch lokale Erwärmung veränderbar ist, wurden bereits erörtert.

Der Datenspeicher kann außer den in den Figuren dargestellten Schichten zusätzliche Lagen aufweisen, zum Beispiel eine Schicht mit Absorberfarbstoff, eine Schutzschicht oder eine Trägerlage. So kann zum Beispiel bei der Ausführungsform gemäß Figur 4 unterhalb der Reflexionsschicht 10' eine Trägerlage angeordnet sein, die bei einer bevorzugten Ausführungsform an ihrer Unterseite mit einer Klebeschicht versehen ist. Mit Hilfe dieser Klebeschicht kann der Datenspeicher direkt auf einen Gegenstand aufgeklebt werden. Der Datenspeicher kann auf diese Weise als eine Art Etikett eingesetzt werden, das praktisch unsichtbare Informationen enthält, die sich nur mit Hilfe eines holographischen Aufbaus zum Auslesen von Information entschlüsseln lassen.

## Patentansprüche

1. Holographischer Datenspeicher, mit einer als Speicherschicht eingerichteten Polymerfolie (2), die lokal durch Erwärmung veränderbar ist und die zum Speichern von holographischer Information eingerichtet ist,
**dadurch gekennzeichnet,**
**dass** die Oberflächenstruktur der Polymerfolie (2) lokal durch Erwärmung veränderbar ist,
**dass** die Polymerfolie zum Speichern holographischer Information über die lokale Oberflächenstruktur der Polymerfolie (2) eingerichtet ist und
**dass** an der beim Speichern von holographischer Information veränderten Oberfläche eine Reflexionsschicht (10) angeordnet ist.

2. Holographischer Datenspeicher nach Anspruch 1, **dadurch gekennzeichnet, dass** der Polymerfolie (2) ein Absorberfarbstoff zugeordnet ist, der dazu eingerichtet ist, einen zum Eingeben von Information dienenden Schreibstrahl zumindest teilweise zu absorbieren und die dabei erzeugte Wärme zumindest teilweise lokal an die Polymerfolie (2) abzugeben.

3. Holographischer Datenspeicher nach Anspruch 1 oder 2, **dadurch gekennzeichnet, dass** das Reflexionsvermögen der Reflexionsschicht lokal durch Erwärmung veränderbar ist.

4. Holographischer Datenspeicher nach einem der Ansprüche 1 bis 3, **gekennzeichnet durch** eine Klebeschicht zum Aufkleben des Datenspeichers auf einen Gegenstand.

5. Holographischer Datenspeicher nach einem der Ansprüche 1 bis 4, **gekennzeichnet durch** gespeicherte holographische Information.

6. Verwendung eines Datenspeichers, der eine als Speicherschicht eingerichtete Polymerfolie (2) aufweist, die lokal durch Erwärmung veränderbar ist, als holographischer Datenspeicher,
**dadurch gekennzeichnet,**
**dass** die Oberflächenstruktur der Polymerfolie (2) lokal durch Erwärmung veränderbar ist,
**dass** holographische Information über die lokale Oberflächenstruktur der Polymerfolie (2) abspeicherbar ist und dass an der beim Speichern von holographischer Information veränderten Oberfläche eine Reflexionsschicht (10) angeordnet ist.

7. Verwendung nach Anspruch 6, **dadurch gekennzeichnet, dass** der Datenspeicher (1) die Merkmale des holographischen Datenspeichers nach einem der Ansprüche 2 bis 5 aufweist.

8. Verfahren zum Eingeben von Information in einen holographischen Datenspeicher nach einem der Ansprüche 1 bis 5, wobei in einem Hologramm eines Speicherobjekts enthaltene holographische Information als zweidimensionale Anordnung berechnet wird und ein Schreibstrahl (4) einer Schreibeinrichtung, vorzugsweise eines Laserlithographen, auf eine als Speicherschicht (2) eingerichtete Polymerfolie (2) des Datenspeichers bzw. der Polymerfolie (2) zugeordnetem Absorberfarbstoff gerichtet und entsprechend der zweidimensionalen Anordnung so angesteuert wird, dass die lokale Oberflächenstruktur der Polymerfolie (2) gemäß der holographischen Information eingestellt wird.

9. Verfahren nach Anspruch 8, **dadurch gekennzeichnet, dass** die Reflexionsschicht (10) aufgebracht wird, nachdem die lokale Oberflächenstruktur der Polymerfolie (2) gemäß der holographischen Information eingestellt worden ist.

10. Verfahren nach Anspruch 8, **dadurch gekennzeichnet, dass** die Reflexionsschicht aufgebracht wird, bevor die lokale Oberflächenstruktur der Polymerfolie gemäß der holographischen Information eingestellt wird.

11. Verfahren nach Anspruch 10 zum Eingeben von Information in einen holographischen Datenspeicher nach Anspruch 3, **dadurch gekennzeichnet, dass** über lokale Erwärmung mittels des Schreibstrahls sowohl die lokale Oberflächenstruktur der Polymerfolie als auch das lokale Reflexionsvermögen der Reflexionsschicht gemäß der holographischen Information eingestellt werden.

12. Verfahren zum Auslesen von Information aus einem holographischen Datenspeicher nach einem der Ansprüche 1 bis 5, wobei Licht, vorzugsweise kohärentes Licht (12, 13), großflächig auf eine Speicherschicht (2) des Datenspeichers (1) gerichtet und von der Oberflächenstruktur (6, 8, 9) der Polymerfolie (2) moduliert wird, wobei als Rekonstruktion der in dem von dem Licht erfassten Bereich enthaltenen holographischen Information ein holographisches Bild in einem Abstand zu dem Datenspeicher (1) erfasst wird.

13. Verfahren nach Anspruch 12 zum Auslesen von Information aus einem holographischen Datenspeicher nach Anspruch 3, wobei das großflächig auf die Speicherschicht gerichtete kohärente Licht von der Oberflächenstruktur der Polymerfolie und dem lokal variierenden Reflexionsvermögen der Reflexionsschicht moduliert wird.

## Claims

1. Holographic data memory, having a polymer film (2) which is configured as a memory layer, can be changed locally by heating and is configured to store holographic information,
**characterized**
**in that** the surface structure of the polymer film (2) can be changed locally by heating,
**in that** the polymer film is configured to store holographic information via the local surface structure of the polymer film (2), and
**in that** a reflective layer (10) is arranged on the surface changed during the storage of holographic information.

2. Holographic data memory according to Claim 1, **characterized in that** the polymer film (2) is assigned an absorber dye, which is configured to absorb, at least partly, a write beam used for the input of information and to discharge the heat produced in the process, at least partly, locally to the polymer film (2).

3. Holographic data memory according to Claim 1 or 2, **characterized in that** the reflective capacity of the reflective layer can be changed locally by heating.

4. Holographic data memory according to one of Claims 1 to 3, **characterized by** an adhesive layer for sticking the data memory onto an object.

5. Holographic data memory according to one of Claims 1 to 4, **characterized by** stored holographic information.

6. Use of a data memory, which has a polymer film (2) which is configured as a memory layer and can be changed locally by heating, to store holographic information,
**characterized**
**in that** the surface structure of the polymer film (2) can be changed locally by heating,
**in that** holographic information can be stored via the local surface structure of the polymer film (2), and
**in that** a reflective layer (10) is arranged on the surface changed during the storage of holographic information.

7. Use according to Claim 6, **characterized in that** the data memory (1) has the features of the holographic data memory according to one of Claims 2 to 5.

8. Method for putting information into a holographic data memory according to one of Claims 1 to 5, holographic information contained in a hologram of a stored object being calculated as a two-dimensional arrangement, and a write beam (4) of a writing device, preferably a laser lithograph, being aimed at a polymer film (2) configured as a memory layer (2) of the data memory and/or the absorber dye assigned to the polymer film (2), and being driven in accordance with the two-dimensional arrangement such that the local surface structure of the polymer film (2) is adjusted in accordance with the holographic information.

9. Method according to Claim 8, **characterized in that** the reflective layer (10) is applied after the local surface structure of the polymer film (2) has been adjusted in accordance with the holographic information.

10. Method according to Claim 8, **characterized in that** the reflective layer is applied before the local surface structure of the polymer film is adjusted in accordance with the holographic information.

11. Method according to Claim 10 for inputting information into a holographic data memory according to Claim 3, **characterized in that**, via local heating by means of the write beam, both the local surface structure of the polymer film and the local reflective capacity of the reflective layer are adjusted in accordance with the holographic information.

12. Method for reading information out of a holographic data memory according to one of Claims 1 to 5, light, preferably coherent light (12, 13) being aimed over a large area at a memory layer (2) of the data memory (1) and being modulated by the surface structure (6, 8, 9) of the polymer film (2), a holographic image being registered at a distance from the data memory (1) as a reconstruction of the holographic information contained in the region covered by the light.

13. Method according to Claim 12 for reading information out of a holographic data memory according to Claim 3, the coherent light aimed over a large area at the memory layer being modulated by the surface structure of the polymer film and the locally varying reflective capacity of the reflective layer.

## Revendications

1. Mémoire de données holographique, comprenant un film en polymère (2) arrangé sous la forme d'une couche de mémoire, lequel peut être modifié localement par échauffement et qui est arrangé pour enregistrer des informations holographiques,
**caractérisée en ce**
**que** la structure de surface du film en polymère (2) peut être modifiée localement par échauffement,
**que** le film en polymère est arrangé pour enregistrer des informations holographiques par le biais de la structure de surface locale du film en polymère (2) et qu'une couche réfléchissante (10) est disposée sur la surface modifiée lors de l'enregistrement d'informations holographiques.

2. Mémoire de données holographique selon la revendication 1, **caractérisée en ce qu'**un colorant absorbant est associé au film en polymère (2), lequel est arrangé pour absorber au moins partiellement un rayon d'écriture servant à la saisie d'informations et pour délivrer la chaleur ainsi produite au moins partiellement localement au film en polymère (2).

3. Mémoire de données holographique selon la revendication 1 ou 2, **caractérisée en ce que** le pouvoir réfléchissant de la couche réfléchissante peut être modifié localement par échauffement.

4. Mémoire de données holographique selon l'une des revendications 1 à 3, **caractérisée par** une couche adhésive pour coller la mémoire de données sur un objet.

5. Mémoire de données holographique selon l'une des revendications 1 à 4, **caractérisée par** des informations holographiques enregistrées.

6. Utilisation d'une mémoire de données, laquelle présente un film en polymère (2) arrangé sous la forme d'une couche de mémoire, lequel peut être modifié localement par échauffement, en tant que mémoire de données holographique,
**caractérisée en ce**
**que** la structure de surface du film en polymère (2) peut être modifiée localement par échauffement,
**que** des informations holographiques peuvent être enregistrées par le biais de la structure de surface locale du film en polymère (2) et
**qu'**une couche réfléchissante (10) est disposée sur la surface modifiée lors de l'enregistrement d'informations holographiques.

7. Utilisation selon la revendication 6, **caractérisée en ce que** la mémoire de données (1) présente les caractéristiques de la mémoire de données holographique selon l'une des revendications 2 à 5.

8. Procédé pour saisir des informations dans une mémoire de données holographique selon l'une des revendications 1 à 5, selon lequel les informations holographiques contenues dans un hologramme d'un objet mémoire sont calculées sous la forme d'un arrangement bidimensionnel et un rayon d'écriture (4) d'un dispositif d'écriture, de préférence un lithographe à laser, est dirigé sur un film en polymère (2) arrangé sous la forme d'une couche de mémoire de la mémoire de données ou un colorant absorbant associé au film en polymère (2) et commandé en fonction de l'arrangement bidimensionnel de telle sorte que la structure de surface locale du film en polymère (2) soit réglée conformément aux informations holographiques.

9. Procédé selon la revendication 8, **caractérisé en ce que** la couche réfléchissante (10) est appliquée après avoir réglé la structure de surface locale du film en polymère (2) conformément aux informations holographiques.

10. Procédé selon la revendication 8, **caractérisé en ce que** la couche réfléchissante est appliquée avant d'avoir réglé la structure de surface locale du film en polymère (2) conformément aux informations holographiques.

11. Procédé selon la revendication 10 pour saisir des informations dans une mémoire de données holographique selon la revendication 3, **caractérisé en ce que** la structure de surface locale du film en polymère ainsi que le pouvoir réfléchissant local de la couche réfléchissante sont tous deux réglés conformément aux informations holographiques par échauffement local au moyen du rayon d'écriture.

12. Procédé pour lire des informations depuis une mémoire de données holographique selon l'une des revendications 1 à 5, selon lequel de la lumière, de préférence de la lumière cohérente (12, 13), est dirigée sur une grande surface d'une couche de mémoire (2) de la mémoire de données (1) et modulée par la structure de surface (6, 8, 9) du film en polymère (2), une image holographique étant détectée à une certaine distance de la mémoire de données (1) en tant que reconstruction des informations holographiques contenues dans la zone couverte par la lumière.

13. Procédé selon la revendication 12 pour lire des informations depuis une mémoire de données holographique selon la revendication 3, selon lequel la lumière cohérente dirigée sur une grande surface de la couche de mémoire est modulée par la structure de surface du film en polymère et le pouvoir réfléchissant variant localement de la couche réfléchissante.
